# EUROPEAN PATENT APPLICATION

(11) **EP 0 803 529 A1**
(43) Date of publication of application: **29.10.1997**
(21) Application number: 97106838.2
(22) Date of filing: 24.04.1997
(51) Int. Cl.: C08G 77/388, C08G 77/452

(54) **Curable resin composition**

(30) Priority: 25.04.1996 JP 131220/96
(71) Applicant: NIPPON PAINT CO., LTD., Kita-ku, Osaka (JP)
(72) Inventor: Ohsugi, Hiroharu, Hirakata-shi, Osaka-fu (JP); Nishimura, Eiichi, Suita-shi, Osaka-fu (JP); Tanabe, Hisaki, Yawata-shi, Kyoto-fu (JP)
(74) Representative: Kinzebach, Werner, Dr.

(57) **Abstract**

A curable resin composition curable through a hydrosilylation reaction of allyl group is disclosed. The allyl group-bearing component is an allyl cyanurate or isocyanurate monomer or polymer having a plurality of allyl groups in the molecule.

## Description

### BACKGROUND OF THE INVENTION

This invention relates to a resin composition curable through a hydrosilylation reaction.

Resinous compositions curable through the addition reaction of hydrosilyl group to carbon-to-carbon double bond in the presence of a platinum catalyst have been known in the art. For example, curable compositions in which vinylpolysiloxanes are crosslinked with organohydrogenpolysiloxanes have long been known. However, the cured product of these compositions is swellable with conventional organic solvents and thus exhibits poor solvent resistance as well as poor alkali resistance. The compositions also have a poor overlaying property when used for coating purposes. These defects have precluded the vinylpolysiloxane based compositions from application to coating compositions of general use.

U.S.Patent No. 5,256,754 discloses a hydrosilylative composition containing a resin having a plurality of alkenyl groups, an organohydrogenpolysiloxane having a plurality of silicon-hydrogen bonds, and a hydrosilylation catalyst. This composition may give a cured film satisfying with various requirements including excellent solvent, alkali, acid, water, salt spray, corrosion and soiling resistances as well as good overlaying property. Moreover, this composition may be formulated as solvent-free or high solids coating compositions.

It has been discovered that the above composition are susceptible to yellowing due to the presence of unreacted alkenyl groups when applied on a substrate and then exposed to light for a long period of time.

It is, therefore, a principal object of this invention to provide a hydrosilylative composition which is less susceptible to yellowing while retaining all or most of advantageous properties of known hydrosilylation compositions. Other objects and advantages will become apparent as the description proceeds.

### SUMMARY OF THE INVENTION

In order to accomplish the above and other objects, the present invention provides a curable resin composition comprising:
(a) an allyl cyanurate monomer or polymer having a plurality of allyl groups in the molecule, or an allyl isocyanurate monomer or polymer having a plurality of allyl groups in the molecule;
(b) an organohydrogenpolysiloxane having a plurality of silicon-hydrogen bonds in the molecule; and
(c) a hydrosilylation catalyst.

The curing reaction of the resin composition of this invention proceeds even at relatively low temperatures with no or little volumetric shrinkage. Cured films produced from the composition not only exhibit improved non-yellowing and other weatherability properties but also have many advantages including high solvent, alkali, acid, water, salt spray, corrosion and soiling resistances as well as high overcoating adhesion.

### DETAILED DISCUSSION

Triallyl cyanurate (TAC) and its enol isomer triallyl isocyanurate (TAIC) are known and commercially available as raw materials of allyl resins. Diallyl cyanurates (DAC) having an unsubstituted or a C₁-C₆-alkyl substituted imido group and diallyl isocyanurate (DAIC) having an unsubstituted or a C₁-C₆-alkyl substituted enol group are also known as raw materials of allyl resins. These allyl monomers and their homopolymers have a plurality of allyl groups in the molecule and are capable of crosslinking through the hydrosilylation reaction. Copolymers of one of the above allyl monomers with an ethylenic monomer having a plurality of allyl groups in the molecule are also capable of crosslinking through the hydrosilylation reaction. Examples of ethylenic monomers copolymerizable with the allyl monomer include (meth)acrylic acid, methyl (meth) acrylate, ethyl (meth)acrylate, n-propyl (meth)acrylate, n-butyl (meth)acrylate, t-butyl (meth)acryalte, 2-hydroxyethyl (meth)acrylate, 2-hydroxypropyl (meth)acrylate, 2-sulfoethyl (meth)acrylate, trimethoxysilylpropyl (meth) acrylate, acid phosphoxypropyl (meth)acrylate, (meth) acrylamide, styrene, maleic acid or vinyl acetate.

Polymerization may be conducted by the bulk or solution polymerization method known per se using a peroxide or azo polymerization initiator. The homo- and copolymers preferably have a number average molecular weight from 500 to 20,000, more preferably from 500 to 10,000. Excessively high molecular weights will decrease the compatibility with the organohydrogenpolysiloxane component or make the polymer not suitable for use in solvent-free of high solids formulations because of high viscosity levels of the polymer. Copolymers desirably comprise at least 50 % by weight of the copolymer of the allyl cyanurate or allyl isocyanurate monomer so that the copolymer have a sufficient mumber of crosslinkable sites.

The organohydrogenpolysiloxanes used in the present invention as the component (b) may be the same as those disclosed in U.S. Patent Nos. 5,256,754 and 5,324,807, the entire disclosures of which are incorporated herein by reference. The organohydrogenpolysiloxanes have one of the following formulas I, II, III and IV:

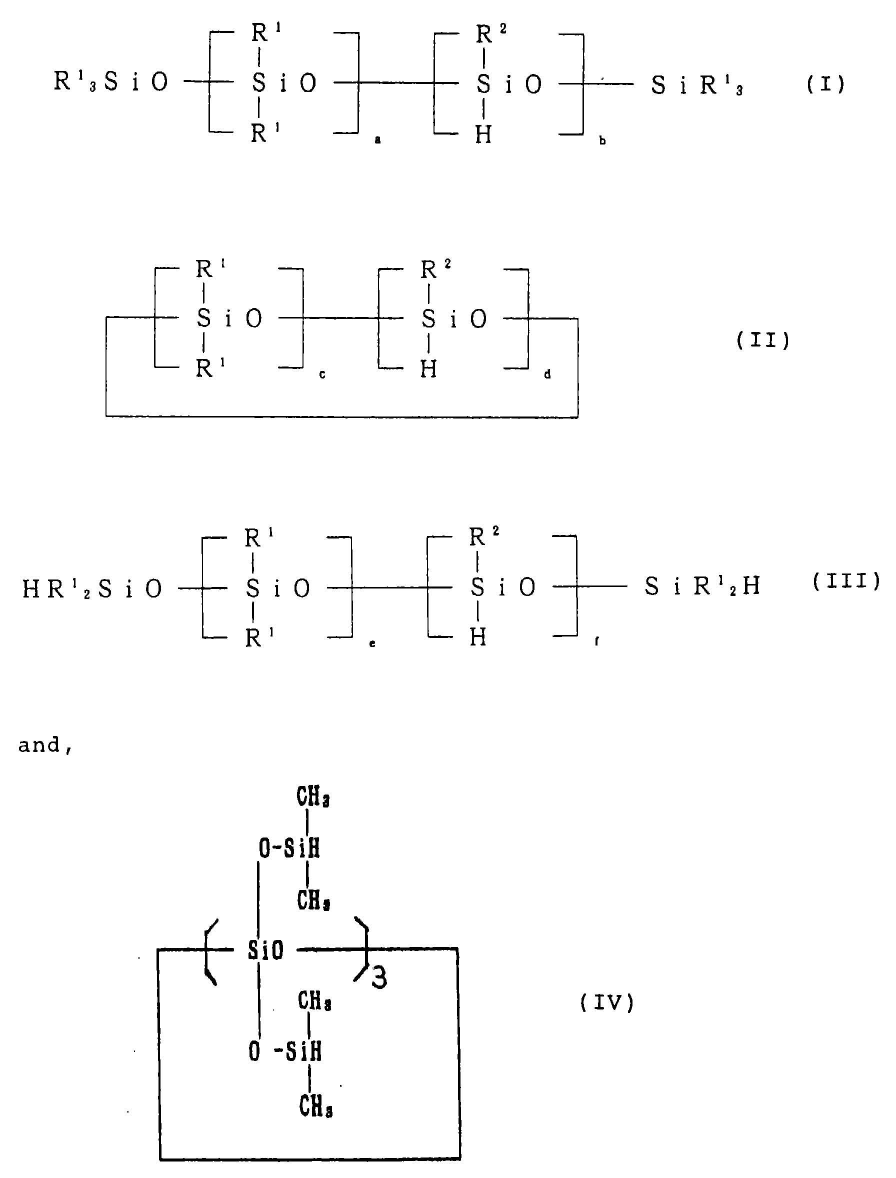

In the abvoe formulas, R¹ and R² are independently a C₁-C₆ alkyl or phenyl; a is zero or an integer up to 100; b is an integer from 2 to 100; c is zero or an integer up to 8 and d is an integer from 2 to 10 with the proviso that the sum of c + d equals 3 to 10; e is an integer from 2 to 100; and f is zero or an integer up to 100.

Examples of C₁-C₆ alkyls for R¹ and R² are methyl, ethyl, propyl, butyl and hexyl and their isomeric groups. Methyl and n-propyl are preferable from a commercial point of view. Degree of polymerization of the polysiloxanes of the above formulas are defined by a through f. Because the viscosity increases with the increase of degree of polymerization, excessively high degree of polymerization will adversely affect not only the workability of composition but also the compatibility with the counterpart component (a). Polysiloxanes having phenyl groups are preferable for their increased compatibility with the counterpart component. Thus, particularly preferable specific examples of the above polysiloxanes include methylhydrogenpolysiloxanes, methylphenylhydrogenpolysiloxanes and methylpropylhydrogenpolysiloxanes such as those disclosed in the above-cited U.S. Patents.

Preferably proportions of component (a) and component (b) in the composition are such that from 0.5 to 4, more preferably from 0.8 to 1.5 atoms of the hydrogen atom attached to the silicon atom are present per mole of the allyl group.

A hydrosilylation catalyst is required for the curing reaction of the composition of this invention. Usually Group VIII transional metals or their compounds are used. Specific examples thereof include PtCl₄; H₂PtCl₆ · 6H₂O; platinum vinylsiloxane complex of the formula: Ptn(ViMe₂SiOSiMe₂Vi)m wherein Vi is vinyl, Me is methyl, n and m are an integer; platinum phosphine complex of the formula: Pt(PPh)₄ wherein Ph is phenyl; platinum olefin complex of the formula: PtCl₂ (cod) wherein cod is cyclooctadiene; Pt (acac)₂ wherein acac is acetylacetonato; trans- or cis-[PtCl₂(NH₂Pr)₂] wherein Pr is propyl; PdCl₂(PPh₃)₂; PdCl₂(PhCN)₂; RhCl₂(PPh₃)₃; RhCl(cod)₂; Ru(cpd)₂ wherein cpd is cyclopentadiene and the like. Other examples of catalysts include ruthenium carbonyl-cluster complexes disclosed in commonly assigned Japanese Patent Application No. 7/136489, and platinum complexes disclosed in JP-A-6/503591 and JP-A-6/503592. The catalyst may be added to the composition as a solution or dilution in a solvent such as alcohols, aromatic or aliphatic hydrocarbons, ketones and basic solvents. Platinum catalysts such as chloroplatinic acid are generally used. The amount of catalyst ranges between 5 and 10,000 ppm, preferably between 20 and 1,000 ppm relative to 100 parts by weight of the solids content of the composition. Excessive addition of catalyst may cause coloring of cured films and is uneconomical because Group VIII metals are generally expensive. The catalyst may be added in combination with an acetylenic compound capable coordinating with platinum to retard its catalytic activity. Examples of such retardants include ethynyl alcohol, propargyl alcohol, 2-methyl-3-butyn-2-ol, 3-trimethylsiloxypropyne, 3-trimethylsiloxy-3, 3-dimethylpropyne, bis(1,1-dimethyl-2-propynyloxy)-dimethylsilane, bis(1,1-dimethyl-2-propynyloxy)-diphenylsilane, bis(1,1-dimethyl-2-propynyloxy)-phenylmethylsilane, polymers of acrylate or methacrylate esters of α,α-dialkylpropargyl alcohol or its ethylene oxide adducts, and alkynyl group-containing acrylic polymers disclosed in U.S. Patent No. 5,324,807.

The composition of this invention may be used with or without solvent. The curing reaction may be accelerated by heating though it may proceed even at room temperature. Opposed to the prior art compositions utilizing a condensation reaction of a silanol group with an alcoholic hydroxyl group or alkoxy group, the linkage formed by the curing reaction of the composition of this invention is - Si-C-C- which contributes to the promotion of the various properties of the cured product including moisture and water resistance, salt spray resistance, solvent resistance, alkali resistance, overlaying property and so on.

The composition of this invention may contain, depending upon its intended use, various auxiliary components such as pigments and other conventional additives. However, it is preferable to avoid the addition of those substances or compounds which would retard the hydrosilylating reaction such as nitrogen-, phosphorus- or arsenic-containing compounds.

When used for coating purposes, the composition of this invention may give a film having satisfactory durability, acid resistance, water resistance and other properties. When used for molding purposes, it gives a flexible product having excellent mechanical properties. Accordingly, the composition of this invention finds its use, for example as decorative or protective coating compositions, electrical insulation material, anti-blotting top coats, molding material and so on. Furthermore, the composition of this invention allows high solids, low viscosity paints to be formulated.

The following examples are given for illustrative purposes only. All parts and percent therein are by weight unless otherwise specified.

### Production Example 1

### TAIC homopolymer

A reactor equipped with a stirrer, a reflux condenser and a nitrogen gas tube was charged with 90 parts of xylene and heated to 100°C while bubbling with nitrogen gas. To this was added dropwise a mixture of 100 parts of triallyl isocyanurate (TAIC), 10 parts of xylene and 1.75 parts of dimethyl 2,2'-azobisisobutyrate over 2 hours. After the addition, the mixture was kept at 100°C for 3 hours. A solution of TAIC homopolymer having a number average molecular weight of 4,020 measured by the GPC method using polystyrene standard was obtained.

### Production Example 2

### TAIC copolymer

The same reactor as used in Production Example 1 was charged with 100 parts of xylene and heated to 100°C while bubbling with nitrogen gas. To this was added dropwise a mixture of 70 parts of TAIC, 30 parts of t-butyl methacrylate and 1.75 parts of dimethyl 2,2'-azobisisobutyrate over 2 hours. After the addition, the mixture was kept at 100°C for 3 hours. A solution of TAIC copolymer having a number average molecular weight of 7,200 measured by the GPC method using polystyrene standard was obtained.

### Production Example 3

### Allyl group-containing polyester resin

A reactor equipped with a stirrer , a thermometer, a decanter and a nitrogen gas tube was charged with 53.4 parts of isophthalic aicd, 26.7 parts of neopentyl glycol hydroxypivalic acid ester, 1.6 parts of trimethylolpropane and 0.05 parts of dibutyltin oxide and heated to 150°C. Then the inner temperature was raised to 210°C over 10 hours for allowing the polycondensation reaction of reactants. When an acid number of 5.0 was reached, the inner temperature was lowered to 120°C. Then 17.1 parts of trimellitic anhydride were added to the reaction mixture and allowed to react for 1 hour. To this was added a mixture of 10.2 parts of allyl glycidyl ether, 31 parts of xylene and 0.2 parts of dimethylbenzylamine. After the addition, the reaction was continued for additional 2 hours until an acid number of 5.0 was reached. A solution of allyl group-containing polyester resin was obtained.

### Example 1

70 parts of TAIC monomer, 35 parts of a polysiloxane of the formula: 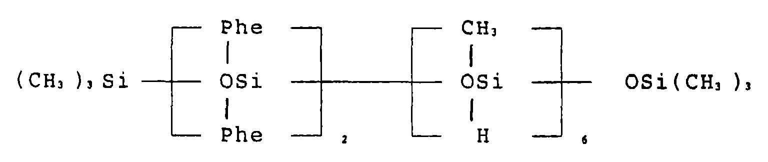 and 1.5 parts of 2 % isopropanol solution of chloroplatinic acid were thoroughly mixed, applied to a dry film thickness of 30 µm onto a steel plate having a white paint sub-coating layer, and baked at 140 °C for 20 minutes.

### Example 2

Example 1 was followed using a mixture of 35 parts of TAIC monomer, 65 parts of the same polysiloxane and 0.5 parts of 2 % isopropanol solution of chloroplatinic acid.

### Example 3

Example 1 was followed using a mixture of 60 parts of TAIC, 65 parts of the same polysiloxane and 1.0 part of 2 % isopropanol solution of chloroplatinic acid.

### Example 4

Example 1 was followed using a mixture of 70 parts of a TAIC homopolymer solution of Production Example 1, 65 parts of the same polysiloxane and 1.5 part of 2 % isopropanol solution of chloroplatinic acid.

### Example 5

Example 1 was followed using a mixture of 100 parts of a TAIC copolymer solution of Production Example 2, 50 parts of the same polysiloxane and 1.5 part of 2 % isopropanol solution of chloroplatinic acid.

### Comparative Example

Example 1 was followed using a mixture of 60 parts of a solution of allyl group-containing polyester resin of Production Example 3, 20 parts of the same polysiloxane and 0.5 part of 2 % isopropanol solution of chloroplatinic acid.

### Film evaluation

Cured films of Examples and Comparative Example were tested for their performance according to the following methods. The results are shown in the table below.

### Pencil hardness:

According to JIS K 5400 6-14.

### Solvent resistance:

According to xylene rubbing test. The film was rubbed with a cotton wool piece impregnated with xylene at 50 reciprocations and the change of appearauce, if any, was observed visually.

### Initial gloss:

60 ° mirror gloss was determined.

### Weatherability:

After irradiating the specimens with UV radiation in a weatherometer for 2,000 hours, percent retention of the initial gloss and color difference (ΔE) before and after the irradiation were determined. Change in appearance before and after the irradiation was also observed visually.

| Test results | | | | | | |
|---|---|---|---|---|---|---|
| Test item | Examples | | | | | Com. Ex. |
| | 1 | 2 | 3 | 4 | 5 | |
| Pencil hardness | HB | H | HB | H | F | H |
| Solvent resistance | No Change | ditto | ditto | ditto | ditto | ditto |
| Initial gloss,% | 88 | 90 | 89 | 83 | 82 | 85 |
| Percent retentio of initial gloss | 95 | 99 | 92 | 87 | 85 | 80 |
| ΔE | 0.9 | 1.5 | 2.0 | 2.3 | 1.7 | 10.4 |
| Appearance | No Change | ditto | ditto | ditto | ditto | ditto |

## Claims

1. A curable resin composition comprising:
(a) an allyl cyanurate monomer or polymer having a plurality of allyl groups in the molecule, or an allyl isocyanurate monomer or polymer having a plurality of allyl groups in the molecule;
(b) an organohydrogenpolysiloxane having a plurality of silicon-hydrogen bonds in the molecule; and
(c) a hydrosilylation catalyst.

2. The curable resin composition according to claim 1 wherein said allyl cyanurate monomer is triallyl cyanurate, a diallyl cyanurate having an unsubstituted or a C₁-C₆-alkyl substituted imide group, triallyl isocyanurate, or a diallyl isocyanurate having an unsubstituted or a C₁-C₆-alkyl substituted enol group.

3. The curable resin composition according to claim 1 wherein said polymer is a homopolymer of said allyl cyanurate monomer or a homopolymer of said allyl isocyanurate monomer.

4. The curable resin composition according to claim 1 wherein said copolymer contains at least 50 % by weight of the copolymer of said allyl cyanurate monomer or said allyl isocyanurate monomer and the balance of an ethylenic monomer.

5. The curable resin composition according to claim 1 wherein said organohydrogenpolysiloxane has the formula: 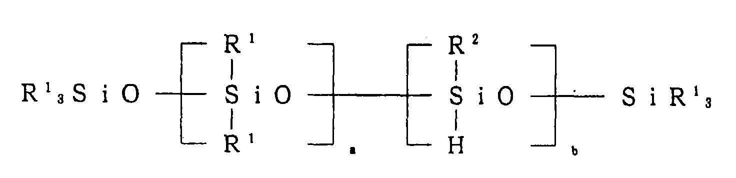 wherein R¹ and R² are independently a C₁-C₆-alkyl or phenyl, a is zero or an integer up to 100, and b is an integer from 2 to 100.

6. The curable resin composition according to claim 1 wherein said organohydrogenpolysiloxane has the formula: 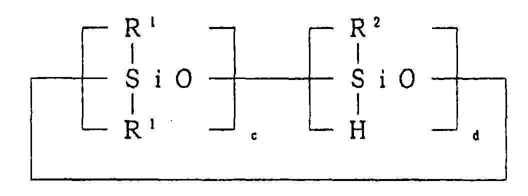 wherein R¹ and R² are independently a C₁-C₆-alkyl or phenyl, c is zero or an integer up to 8, and d is an integer from 2 to 10 with the proviso that the sum of c + d equals 3 to 10.

7. The curable resin composition according to claim 1 wherein said organohydrogenpolysiloxane has the formula: 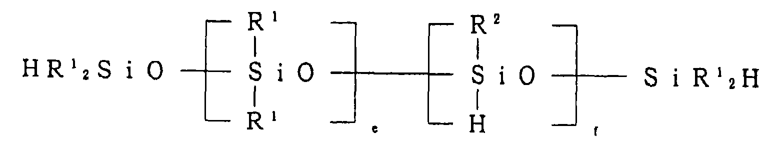 wherein R¹ and R² are independently a C₁-C₆-alkyl or phenyl, e is an integer from 2 to 100, and f is zero or an integer up to 100.

8. The curable resin composition according to claim 1 wherein said organohydrogenpolysiloxane has the formula:

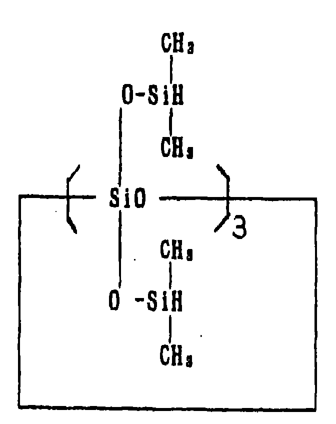

9. The curable resin composition according to claim 1 wherein said hydrosilylation catalyst is a complex of Pt, Pd, Rh or Ru.

10. The curable resin composition according to claim 1 wherein the proportions of component (a) and component (b) are such that from 0.5 to 4 atoms of the hydrogen atom attached to the silicon atom are present per mole of the allyl group.

11. The curable resin composition according to claim 1 wherein the amount of said hydrosilylation catalyst is from 5 to 1,000 ppm relative to 100 parts by weight of the solids content of the composition.

12. The curable resin composition according to claim 1 further comprising a premature curing retardant.
